# EUROPÄISCHE PATENTSCHRIFT

(11) **EP 1 222 421 B1**
(45) Veröffentlichungstag und Bekanntmachung des Hinweises auf die Patenterteilung: **29.09.2004**
(21) Anmeldenummer: 00954502.1
(22) Anmeldetag: 14.07.2000
(51) Int. Cl.: F16L 23/06

(54) **ROHRKUPPLUNG MIT SCHNELLVERSCHLUSS**
PIPE COUPLING WITH A RAPID-ACTION CLOSURE
RACCORD DE TUYAU AVEC FERMETURE RAPIDE

(30) Priorität: 20.10.1999 DE 19950619
(43) Veröffentlichungstag der Anmeldung: 17.07.2002
(73) Patentinhaber: Weinhold, Karl Dipl.-Ing. (FH), D-41464 Neuss (DE)
(72) Erfinder: Weinhold, Karl Dipl.-Ing. (FH), D-41464 Neuss (DE)
(74) Vertreter: COHAUSZ & FLORACK
(86) Internationale Anmeldenummer: PCT/EP2000/006729
(87) Internationale Veröffentlichungsnummer: WO 2001/031246

(56) Entgegenhaltungen:
- DE-C- 19 722 969

## Beschreibung

Die Erfindung betrifft eine Rohrkupplung mit zwei Schellenhälften mit im wesentlichen C-förmigen Querschnitt, die an ihrem einen Ende um jeweils einen Bolzen gegeneinander schwenkbar verbunden sind und mit einem Schnellverschluß zum lösbaren Verbinden der diametral gegenüber liegenden anderen Enden der Schellenhälften, wobei der Schnellverschluß einen Schraubenbolzen aufweist, dessen eines Ende an einer der Schellenhälften angelenkt ist und auf dessen anderes Ende eine die Schellenhälften in die Schließstellung ziehende Schraubenmutter aufgesetzt ist, und wobei an der Schraubenmutter ein Hebel angelenkt ist, der mittels einer Bügelfeder in der Schließstellung arretierbar ist und Rohrflansche zur Verwendung mit einer solchen Rohrkupplung.

Mit einem Schnellverschluß versehene Rohrkupplungen sind in vielerlei Ausführungen bekannt. Bei den meisten dieser Rohrverbindungen müssen die Rohrkupplungsflansche unterschiedlich ausgeführt sein, um eine entsprechende Führung zu erreichen, um die Flanschenden dann axial durch eine Schelle verspannen zu können. Die Führung ist dabei meist als Vater- und Mutterteil ausgeführt.

Aus der DE 197 22 969 C1 ist eine Rohrkupplung bekannt, bei der die beiden Flanschenden stumpf aufeinander gesetzt sind, die also keine Zwangsführung besitzen. Wenn die Montage dieser bekannten Schnellkupplung nicht sehr sorgfältig erfolgt, ist es möglich, daß sich die beiden Flansche gegeneinander verschieben können, was zur Folge hat, daß der Dichtring beschädigt oder gar zerstört werden kann, so daß die Funktion der bekannten Rohrkupplung beeinträchtigt ist.

Davon ausgehend, liegt der Erfindung die Aufgabe zugrunde, die eingangs genannte und zuvor näher beschriebene Rohrkupplung so auszugestalten und weiterzubilden, daß bei geringem konstruktiven Aufwand eine stets zuverlässige Montage der Rohrkupplung mit einer einwandfreien Dichtung gewährleistet ist.

Diese Aufgabe wird hinsichtlich der Rohrkupplung dadurch gelöst, daß in jeder Schellenhälfte rohrseitig eine Bügelfeder angeordnet ist, deren Auge im Bereich der gelenkigen Verbindung der Schellenhälften mittig angelenkt ist und deren freies Ende im Bereich des am Schnellverschluß befindlichen Endes jeder Schellenhälfte längenverschieblich gehaltert ist.

Hinsichtlich der Flanschenden erfolgt die Lösung der Aufgabe dadurch, daß der Flansch an seinem Ende eine umlaufende Ausnehmung aufweist, die mit dem identischen Flansch des zu verbindenden Rohres einen Ringbund zur Aufnahme der Bügelfedern bildet.

Die beiden Bügelfedern legen sich beim Umlegen der Rohrkupplung in ringförmige Abschnitte der Flansche, so daß die Flanschenden wie durch eine zusätzliche Hülse-zueinander zentriert werden. Beim Zusammenspannen der Rohrkupplung verformen sich beide Federn und legen sich weiterhin ringförmig um die Rohrkupplungsflansche und fixieren damit den entsprechenden Abstand. Auf diese Weise ist zuverlässig ausgeschlossen, daß sich die beiden Flanschenden gegeneinander verschieben können, so daß eine Beschädigung oder gar Zerstörung des zwischen den Flanschenden befindlichen Dichtringes zuverlässig ausgeschlossen ist.

Gemäß einer weiteren Ausgestaltung der Erfindung werden die Augen der Bügelfedern von den die Schellenhälften gelenkig miteinander verbindenden Bolzen aufgenommen, so daß keine zusätzlichen Bauteile zur gelenkigen Aufnahme der Bügelfedern erforderlich sind. Zweckmäßigerweise sind die freien Enden der beiden Bügelfedern hakenförmig ausgebildet, wobei jedes Hakenende die Schellenhälfte im Bereich des Schnellverschlusses umfaßt. So ist gewährleistet, daß die Bügelfedern die beim Spannvorgang eintretende Längenänderung mitmachen. Sinnvollerweise ist die Hakenform so auf die Form der Schellenhälfte angepaßt, daß die Bügelfedern an beiden Enden mit der jeweiligen Schellenhälfte verbunden sind, um eine freie Bewegung der im Inneren der Schellenhälften befindlichen Bügelfedern relativ zu den Schellenhälften zu vermeiden, da eine solche freie Bewegung beim Spannvorgang und auch bei der Lagerhaltung der Rohrkupplungen hinderlich sein könnte.

Nach einer weiteren Lehre der Erfindung weisen beide Schellenhälften eine identische Form auf. Dies ist besonders zweckmäßig, da auf diese Weise die erfindungsgemäße Rohrkupplung äußerst preisgünstig hergestellt werden kann.

In weiterer Ausgestaltung der Erfindung ist vorgesehen, daß die Breite des von zwei Flanschen gebildeten Ringbundes etwas breiter als die Breite der Bügelfedern ist. Auf diese Weise ist sichergestellt, daß die Rohrkupplungsflansche durch die - für sich bekannten - Schrägen der Schelle axial zusammengedrückt werden können. Zur Abdichtung der Rohrverbindung weisen in weiterer Ausgestaltung der Erfindung die Flanschenden eine unmittelbar an die Rohrinnenseite umlaufende Ringnut zur Aufnahme eines Dichtringes auf. Zweckmäßigerweise sind die beiden Flanschenden jeweils mit einer Ringnut mit einem im wesentlichen halbreisförmigen Querschnitt versehen. Dadurch, daß aufgrund der speziellen Ausgestaltung der Rohrkupplung mit den erfindungsgemäßen Bügelfedern eine Zentrierung beider Flanschenden bei der Montage erfolgt, ist es möglich, den Dichtring sehr nahe an der Rohrinnenwandung anzuordnen, wodurch zuverlässig gewährleistet ist, daß keinerlei Produktreste im Ringspalt zwischen den Flanschen verbleiben.

Die Erfindung wird nachfolgend anhand einer ein bevorzugtes Ausführungsbeispiel darstellenden Zeichnung näher erläutert. In der Zeichnung zeigen
- Fig. 1: eine Rohrkupplung in Seitenansicht,
- Fig. 2: die Rohrkupplung im Querschnitt,
- Fig. 3: die Rohrkupplung in einem Schnitt entlang der Linie III-III aus Fig. 2 und
- Fig. 4: die Rohrkupplung in Seitenansicht in Richtung des Pfeiles IV aus Fig. 2.

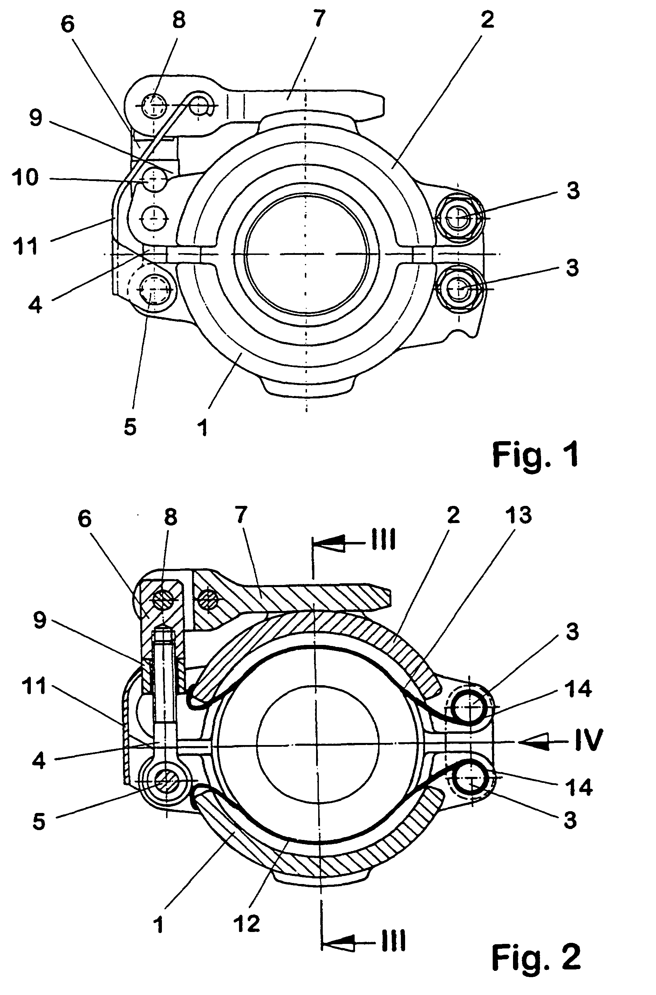

In Fig. 1 ist die erfindungsgemäße Rohrkupplung in einer Seitenansicht dargestellt, wobei die Schellenhälften 1, 2 an ihrem einen benachbarten Ende durch zwei Schraubenbolzen 3 gelenkig bzw. schwenkbar miteinander verbunden sind. Bei den Bolzen 3 kann es sich um lösbare Schraubenbolzen mit aufgesetzter gesicherter Schraubenmutter handeln, wie in Fig. 1 dargestellt ist.

An dem anderen diametral gegenüberliegenden Enden der in ihrem Querschnitt annähernd C-förmigen Schellenhälften 1, 2 befindet sich ein Schnellverschluß mit einem Schraubenbolzen 4, der durch einen Lagerbolzen 5 am anderen Ende der Schellenhälfte 2 um einer zur Achse der Rohrkupplung parallele Achse schwenkbar gelagert ist. Auf das freie mit einem Gewinde versehene Ende des Schraubenbolzens 4 ist eine Schraubenmutter 6 aufgeschraubt, an welcher ein Hebel 7 mittels eines Lagerbolzens 8 angelenkt ist. Die Schraubenmutter 6 wirkt mit einem über den Gewindeschaft des Schraubenbolzens 4 geschobenen Gleitstück 9 zusammen, welches zwei sich in entgegengesetzter Richtungen erstreckende Achsbolzen 10 aufweist, die nach dem Zusammenklappen der Schellenhälften 1 und 2 in nicht näher bezeichnete Vertiefungen am anderen Ende der Schellenhälfte 2 einliegen.

Der Hebel 7 wird mittels einer im dargestellten und insoweit bevorzugten Ausführungsbeispiel an demselben Lagerbolzen 5 wie der Schraubenbolzen 4 angelenkten Bügelfeder 11 in der Schließstellung gesichert.

Im Querschnitt gemäß Fig. 2 ist nun erkennbar, daß im Inneren jeder Schellenhälfte 1, 2 rohrseitig jeweils eine Bügelfeder 12 und 13 angeordnet ist, deren eines Ende jeweils mit einem Auge 14 versehen ist, das um die Bolzen 3 gelegt ist. Das andere Ende der Bügelfedern 12 und 13 ist hakenförmig ausgebildet und um die mittigen Stege der Schellenhälften 1 und 2 gelegt, um eine Längenverschiebbarkeit zum Ausgleich der beim Schließen der Kupplung auftretenden Längenänderung zu ermöglichen.

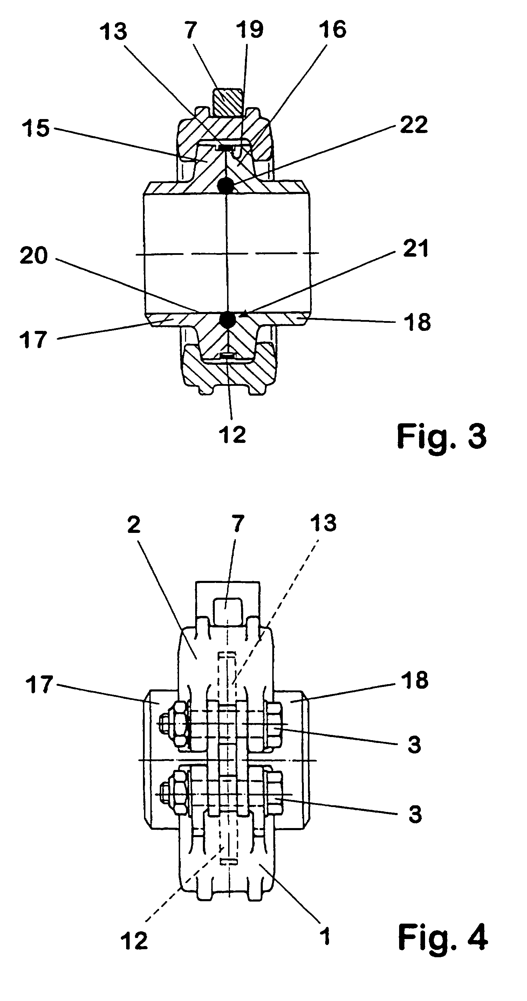

Gemäß einer bevorzugten Ausgestaltung der Erfindung nach Fig. 3 können die Flansche 15, 16 zweier zu verbindender Rohre 17, 18 an ihrem Ende eine umlaufende Ausnehmung aufweisen, wodurch ein Ringbund 19 entsteht, dessen Breite zweckmäßigerweise etwas breiter als die Breite der Bügelfedern 12 und 13 ist. Auf diese Weise ist sichergestellt, daß der durch die schräge Ausbildung der Flansche und korrespondierenden Schelleninnenflanken gewünschte axiale Spannvorgang nicht von den Bügelfedern 12, 13 behindert wird. Die erfindungsgemäße Rohrkupplung eignet sich jedoch auch zur Verbindung von Rohren mit Flanschen ohne Ringbund, wenn die Breite der Bügelfedern ausreichend groß ist.

Aus Fig. 3 geht ferner hervor, daß die Flanschenden eine unmittelbar an die Rohrinnenseite 20 angrenzende umlaufende Ringnut 21 zur Aufnahme eines Dichtringes 22 aufweisen. Bevorzugt wird als Dichtring 22 ein O-Ring mit rundem Querschnitt verwendet, so daß die Ringnuten 21 einen im wesentlichen halbkreisförmigen Querschnitt aufweisen. Bei dieser Ausführung ist sichergestellt, daß keinerlei Produktreste im Ringspalt zwischen den Flanschen 15 und 16 verbleiben können.

Schließlich ist zur Verdeutlichung die erfindungsgemäße Rohrkupplung in einer Seitenansicht in Richtung des Pfeils IV aus Fig. 2 dargestellt, wobei die - verborgenen - Bügelfedern 12 und 13 gestrichelt gezeigt sind.

Der Schließvorgang der Rohrkupplung geschieht folgendermaßen:

Bei geöffnetem Schnellverschluß und auseinandergeklappten Schellenhälften 1, 2 wird die Rohrkupplung um die Flansche 15, 16 herumgelegt, wobei die Schellenhälften 1, 2 um die Bolzen 3 zusammengeklappt werden. Anschließend wird der Schraubenbolzen 4 in die in den Fig. dargestellte vertikale Position geschwenkt. Bedingt durch die im Inneren der Rohrschellenhälften 1,2 angeordneten Bügelfedern 12, 13 wird bereits beim Zusammenklappen der Schellenhälften 1, 2 eine Zentrierung der Rohrflansche 15, 16 erreicht, so daß die im Rohrspalt befindliche Dichtung 22 keinen Schaden nehmen kann. Danach wird das Gleitstück 9 vom freien Ende des Schraubenbolzens 4 über diesen geschoben, bis die Achsbolzen 10 in den nicht näher bezeichneten Vertiefungen der Schellenhälfte 2 einliegen. Daraufhin wird die Schraubenmutter 6 mittels des an ihr angelenkten Hebels 7 auf den Schraubenbolzen 4 aufgeschraubt, bis sie in Kontakt mit dem Gleitstück 9 kommt. Durch Weiterdrehen des Hebels 7 wird über die Achsbolzen 10 des Gleitstücks 9 Druck auf das andere Ende der Schellenhälfte 2 ausgeübt, wodurch die an dieser Seite gegenüberliegenden Enden der Schellenhälften 1, 2 gegeneinander gezogen werden.

Der notwendige axiale Druck zum sicheren Verspannen der beiden Flansche 15 und 16 erfolgt dabei durch die Schrägen der Flansche 15, 16 und der korrespondierenden Schellenhälften Innenseiten. Nach Erreichen der Schließstellung wird der Hebel 7 in die nicht näher bezeichnete Vertiefung der Schellenhälfte 2 eingelegt und das Einklinken der Bügelfeder 11 gegen Drehen oder Schwenken gesichert. Zusätzlich zur Bügelfeder 11 kann der Hebel 7 auch noch mit einem Splint an der Schellenhälfte 2 festgelegt werden.

Aus den Figuren ist schnell ersichtlich, daß beide Schellenhälften 1, 2 eine identische Form haben können, so daß die erfindungsgemäße Rohrkupplung äußerst günstig herstellbar ist.

## Patentansprüche

1. Rohrkupplung mit zwei Schellenhälften (1, 2) mit im wesentlichen C-förmigen Querschnitt, die an ihrem einen Ende um jeweils einen Bolzen (3) gegeneinander schwenkbar verbunden sind und mit einem Schnellverschluß zum lösbaren Verbinden der diametral gegenüber liegenden anderen Enden der Schellenhälften, wobei der Schnellverschluß einen Schraubenbolzen (4) aufweist, dessen eines Ende an einer der Schellenhälften (2) angelenkt ist und auf dessen anderes Ende eine die Schellenhälften in die Schließstellung ziehende Schraubenmutter (6) aufgesetzt ist, und wobei an der Schraubenmutter (6) ein Hebel (7) angelenkt ist, der mittels einer Bügelfeder (11) in der Schließstellung arretierbar ist,
**dadurch gekennzeichnet, daß** in jeder Schellenhälfte (1, 2) rohrseitig eine Bügelfeder (12, 13) angeordnet ist, deren Auge (14) im Bereich der gelenkigen Verbindung der Schellenhälften (1, 2) mittig angelenkt ist und deren freies Ende im Bereich des am Schnellverschluß befindlichen Endes jeder Schellenhälfte (1, 2) längenverschieblich gehaltert ist.

2. Rohrkupplung nach Anspruch 1,
**dadurch gekennzeichnet, daß** die Augen (14) der Bügelfedern (12, 13) von den die Schellenhälften (1, 2) gelenkig miteinander verbindenden Bolzen (3) aufgenommen werden.

3. Rohrkupplung nach Anspruch 1 oder 2 ,
**dadurch gekennzeichnet, daß** die freien Enden der beiden Bügelfedern (12, 13) hakenförmig ausgebildet sind und die Schellenhälften (1, 2) im Bereich des Schnellverschlusses umgreifen.

4. Rohrkupplung nach einem der Ansprüche 1 bis 3,
**dadurch gekennzeichnet, daß** beide Schellenhälften eine identische Form aufweisen.

5. Rohrflansch zur Verwendung mit einer Rohrkupplung nach einem der Ansprüche 1 bis 4,
**dadurch gekennzeichnet, daß** der Flansch (15 bzw. 16) an seinem Ende eine umlaufende Ausnehmung aufweist, die mit dem identischen Flansch (16 bzw. 15) des zu verbindenden Rohres (18 bzw. 17) einen Ringbund (19) zur Aufnahme der Bügelfedern (12, 13) bildet.

6. Rohrflansch nach Anspruch 5,
**dadurch gekennzeichnet, daß** die Breite des von zwei Flanschen (15, 16) gebildeten Ringbundes (19) etwas breiter als die Breite der Bügelfedern (12 bzw. 13) ist.

7. Rohrflansch nach Anspruch 5 oder 6,
**dadurch gekennzeichnet, daß** die Flanschenden eine unmittelbar an die Rohrinnenseite (20) angrenzende umlaufende Ringnut (21) zur Aufnahme eines Dichtringes (22) aufweisen.

8. Rohrflansch nach Anspruch 7
**dadurch gekennzeichnet, daß** jedes Flanschende eine Ringnut (21) mit im wesentlichen halbkreisförmigen Querschnitt aufweist.

## Claims

1. A pipe coupling having two clamp halves (1, 2) having an essentially C-shaped cross-section, which are connected at one of each of their ends by a pin (3) so they are pivotable in relation to one another, and having a quick-acting closure for detachable connection of the diametrically opposing other ends of the clamp halves, the quick-acting closure having a threaded bolt (4), one end of which is linked to one of the clamp halves (2) and on whose other end a threaded nut (6) is placed, which tightens the clamp halves into the closed position, and a lever (7), which is lockable in the closed position using a spring clip (11), being linked to the threaded nut (6),
**characterized in that** a spring clip (12, 13) is positioned on the pipe side in each clamp half (1, 2), whose eye (14) is linked centrally in the region of the articulated connection of the clamp halves (1, 2) and whose free end is held in the region of the end of each clamp half (1, 2) located on the quick-acting closure so it may be displaced lengthwise.

2. The pipe coupling according to Claim 1,
**characterized in that** the eyes (14) of the spring clips (12, 13) are accommodated by the pins (3) which connect the clamp halves (1, 2) to one another in an articulated way.

3. The pipe coupling according to Claim 1 or 2,
**characterized in that** the free ends of the two spring clips (12, 13) are implemented as hook-shaped and enclose the clamp halves (1, 2) in the region of the quick-acting closure.

4. The pipe coupling according to one of Claims 1 through 3,
**characterized in that** both clamp halves have an identical shape.

5. A pipe flange for use with a pipe coupling according to one of Claims 1 through 4,
**characterized in that** the flange (15 or 16) has a peripheral recess on its end which forms an annular shoulder (19) to accommodate the spring clips (12, 13) with the identical flange (16 or 15) of the pipe (18 or 17) to be connected.

6. The pipe flange according to Claim 5,
**characterized in that** the width of the annular shoulder (19) formed by two flanges (15, 16) is somewhat wider than the width of the spring clips (12 or 13) .

7. The pipe flange according to Claim 5 or 6,
**characterized in that** the flange ends have a peripheral annular groove (21), directly adjoining the pipe inside (20), to accommodate a sealing ring (22) .

8. The pipe flange according to Claim 7,
**characterized in that** each flange end has an annular groove (21) having an essentially semicircular cross-section.

## Revendications

1. Raccord pour tubes comportant deux demi-colliers (1,2), possédant une section transversale essentiellement en forme de C, qui sont reliés entre eux, au niveau d'une de leurs extrémités, de manière à pouvoir tourner l'un par rapport à l'autre autour de goujons respectifs (3), et comportant un système de fermeture rapide servant à relier de façon amovible les autres extrémités, diamétralement opposées, des moitiés de collier, dans lequel le dispositif de fermeture rapide comporte un boulon (4), dont une extrémité est articulée sur l'une des moitiés de collier (2), et sur l'autre extrémité duquel est monté un écrou (6), qui tire le demi-collier dans la position fermée, et dans lequel sur l'écrou (6) est articulé un levier (7), qui peut être bloqué dans la position fermé à l'aide d'un ressort à branches (11),
**caractérisé en ce que** dans chaque moitié de collier (1,2) est disposé, côté tube, un ressort à branches (12,13), dont l'oeillet (14) est articulé dans une position centrale dans la zone de la liaison articulée des moitiés de collier (1, 2) et dont l'extrémité libre est retenue de manière à être déplaçable longitudinalement dans la zone de l'extrémité, située sur le dispositif de fermeture rapide, de chaque moitié de collier (1,2).

2. Raccord pour tubes selon la revendication 1, **caractérisé en ce que** les oeillets (14) des ressorts à branches (12,13) sont reçus par les goujons (3) qui relient entre elles de façon articulée les moitiés de collier (1,2).

3. Raccord pour tubes selon la revendication 1 ou 2, **caractérisé en ce que** les extrémités libres des deux ressorts à branches (12,13) sont réalisées en forme de crochets et enserrent les moitiés de collier (1,2) dans la zone du dispositif de fermeture rapide.

4. Raccord pour tubes selon l'une des revendications 1 à 3, **caractérisé en ce que** les deux moitiés de collier possèdent une forme identique.

5. Bride de tube destinée à être utilisée avec un raccordement pour tubes selon l'une des revendications 1 à 4, **caractérisée en ce que** la bride (15 ou 16) comporte, sur son extrémité, un évidement circonférentiel qui forme, avec la bride identique (16 ou 15) du tube à réunir (18 ou 17), un collet annulaire (19) servant à recevoir les ressorts à branches (12,13).

6. Bride de tube selon la revendication 5, **caractérisée en ce que** la largeur du collet annulaire (19) formé par deux brides (15,16) est légèrement supérieure à la largeur des ressort à branches (12 ou 13)

7. Bride de tube selon la revendication 5 ou 6, **caractérisée en ce que** les extrémités de la bride possèdent une rainure annulaire périphérique (21) qui jouxte directement le côté intérieur (20) du tube et sert à loger une bague d'étanchéité (22).

8. Bride de tube selon la revendication 7, **caractérisée en ce que** chaque extrémité de bride possède une gorge annulaire (21) ayant une section transversale essentiellement de forme semi-circulaire.
